# EUROPÄISCHE PATENTSCHRIFT

(11) **EP 3 158 217 B1**
(45) Veröffentlichungstag und Bekanntmachung des Hinweises auf die Patenterteilung: **26.11.2025**
(21) Anmeldenummer: 15713788.6
(22) Anmeldetag: 08.04.2015
(51) Int. Cl.: F16F 13/26

(54) **HYDROLAGER SOWIE KRAFTFAHRZEUG MIT EINEM DERARTIGEN HYDROLAGER**
HYDRAULIC MOUNT AND MOTOR VEHICLE HAVING SUCH A HYDRAULIC MOUNT
PALIER HYDRAULIQUE ET VÉHICULE À MOTEUR ÉQUIPÉ D'UN TEL PALIER HYDRAULIQUE

(30) Priorität: 23.06.2014 DE 102014211952
(43) Veröffentlichungstag der Anmeldung: 26.04.2017
(73) Patentinhaber: ContiTech Vibration Control GmbH, 30175 Hannover (DE)
(72) Erfinder: GENDERJAHN, Robert, 30625 Hannover (DE); WERHAHN, Max, 30449 Hannover (DE); MARIENFELD, Peter, 31608 Marklohe (DE)
(74) Vertreter: Preusser, Andrea
(86) Internationale Anmeldenummer: PCT/EP2015/057547
(87) Internationale Veröffentlichungsnummer: WO 2015/197213

(56) Entgegenhaltungen:
- US-A1- 2011 042 872
- US-A1- 2011 042 873
- US-B1- 6 176 477

## Beschreibung

Die Erfindung betrifft ein Hydrolager mit einer Tragfeder, einer von der Tragfeder zumindest teilweise umschlossenen Arbeitskammer, die mit einer Hydraulikflüssigkeit gefüllt ist, einer Ausgleichskammer, einer Trennwand, die zwischen der Arbeitskammer und der Ausgleichskammer angeordnet ist, einem zwischen der Arbeitskammer und der Ausgleichskammer ausgebildeten Drosselkanal zum Austausch von Hydraulikflüssigkeit, einer Steuermembran, die zur Veränderung eines Arbeitskammervolumens der Arbeitskammer ausgebildet ist, und einem Aktor zum Auslenken der Steuermembran, wobei das Hydrolager einen Steuerkanal aufweist, der von der Arbeitskammer zu der Steuermembran führt, und ein Strömungswiderstand des Steuerkanals größer als ein Strömungswiderstand des Drosselkanals ist.

Außerdem betrifft die Erfindung ein Kraftfahrzeug, das einen Fahrzeugrahmen, einen Motor und ein als Hydrolager ausgebildetes Motorlager umfasst, das eine lagernde Verbindung zwischen dem Motor und dem Fahrzeugrahmen herstellt.

Hydrolager, die auch als Hydrauliklager bezeichnet werden, sind aus dem Stand der Technik bekannt. Sie dienen zur elastischen Abstützung von Aggregaten, insbesondere von Kraftfahrzeugmotoren. Mit Hilfe derartiger, sich z. B. zwischen einem Motor und einem Chassis des Kraftfahrzeugs befindenden Hydrolagern soll einerseits verhindert werden, dass sich Motor-Vibrationen auf das Chassis übertragen und andererseits sollen die mit dem Fahrbetrieb gegebenen Erschütterungen des Chassis nicht oder nur gedämpft vom Chassis an den Motor gelangen können.

Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen muss, um entstehende Schwingungen über einen breiten Frequenzbereich möglichst zu isolieren.

In ihrer Grundversion weisen derartige Hydrauliklager üblicherweise ein Gummielement als Tragfeder in Verbindung mit einem hydraulischen Dämpfer auf. Das Gummielement ist oft als Hohl-Konus ausgebildet. Die Tragfeder kann somit eine Mantelwandung der Arbeitskammer bilden. Die Tragfeder wird deshalb auch als Tragkörper verstanden. An der oberen, spitzen Stirnseite des Hohl-Konuses ist eine obere Abdeckung vorgesehen, an der ein Anschlusselement zur Befestigung des Motors angebracht ist. Das Anschlusselement ist für gewöhnlich ein Gewindebolzen, der mit dem Motor verschraubt werden kann.

Dabei umfasst der hydraulische Dämpfer zumeist mindestens zwei Kammern, nämlich die genannte Arbeitskammer und eine Ausgleichskammer. In Längsrichtung des Hydrolagers ist die Ausgleichskammer für gewöhnlich unterhalb der Arbeitskammer angeordnet. Um die Arbeiterkammer und die Ausgleichskammer voneinander zu trennen, ist zwischen der Ausgleichskammer und der Arbeitskammer eine Trennwand angeordnet. Außerdem ist ein zwischen der Arbeitskammer und der Ausgleichkammer ausgebildeter Drosselkanal zum Austausch von Hydraulikflüssigkeit vorgesehen. Vorzugsweise ist der Drosselkanal zumindest abschnittsweise von der Trennwand ausgebildet. Alternativ kann der Drosselkanal auch von der Trennwand getrennt ausgebildet sein. Die Hydraulikflüssigkeit in der Arbeitskammer, der Ausgleichskammer und dem Drosselkanal bildet vorzugsweise das gesamte Hydraulikvolumen des Hydrolagers, sofern in Sonderausführungen nicht weitere Zusatzvolumina vorgesehen sind. Als Hydraulikflüssigkeit wird vorzugsweise ein Gemisch aus Öl und Wasser oder ein Fluid mit Glykol eingesetzt.

Bei einer Belastung des Hydrolagers wirkt eine Kraft in Längsrichtung des Hydrolagers auf die Tragfeder, so dass sich diese elastisch verformt. Diese Verformung wird auch als Einfedern der Tragfeder bezeichnet. Wird durch das Einfedern der Tragfeder die Arbeitskammer verkleinert, steigt der Druck in der Arbeitskammer an, so dass ein Teil der Hydraulikflüssigkeit der Arbeitskammer durch den Drosselkanal in die Ausgleichskammer strömt. Für die strömende Hydraulikflüssigkeit stellt der Drosselkanal einen Strömungswiderstand dar. Das Durchströmen des entsprechend ausgebildeten Drosselkanals erzeugt deshalb Dissipation und somit Dämpfungsarbeit.

Die Ausgleichskammer ist bevorzugt mit mindestens einem membranartig verformbaren Wandungsteil versehen, so dass der in die Ausgleichskammer einströmende Teil der Hydraulikflüssigkeit aufgenommen werden kann.

Ein derartiges Hydrolager ist beispielsweise aus dem Dokument DE 10 2010 060 886 A1 oder aus dem Dokument DE 10 2012 008 497 A1 bekannt.

Die Dämpfungseigenschaften solcher Hydrolager sind aufgrund ihrer Bauweise frequenzabhängig. Statische oder quasistatische Belastungen unterhalb einer Frequenz von 5 Hz werden dabei üblicherweise von der Tragfeder aufgenommen, die eine relativ große Steifheit aufweist.

Niederfrequente Schwingungen, d.h. Schwingungen mit Frequenzen von ca. 5 bis 20 Hz, die im Allgemeinen mit großen Amplituden auftreten, werden durch das Zusammenwirken der beiden Hydraulikkammern über den Drosselkanal gedämpft. Die Dämpfung entsteht dabei mit dem Strömen von zumindest eines Teils der Hydraulikflüssigkeit der Arbeitskammer durch den Drosselkanal in die Ausgleichskammer, und umgekehrt, wobei eine entsprechende Dämpfungsarbeit geleistet wird.

Hochfrequente Schwingungen, also Schwingungen im Frequenzbereich von 20 Hz bis beispielsweise 50 Hz, 100 Hz oder 200 Hz, werden aufgrund der Trägheit, Viskosität und Inkompressibilität der Hydraulikflüssigkeit und/oder der hohen Steifigkeit und Trägheit der Tragfeder nur sehr gering gedämpft oder sogar nahezu ungedämpft übertragen. Diese Schwingungen treten zwar im Allgemeinen nur mit kleinen Amplituden auf, sind aber aufgrund ihrer akustischen Wirkung von höherer Bedeutung.

Zur besseren Isolation solcher Schwingungen kann die Trennwand zwischen Arbeitskammer und Ausgleichskammer teilweise flexibel oder mit einem Freiweg ausgebildet werden. Eine solche Lösung wird jedoch vielen Isolierungsanforderungen, insbesondere hinsichtlich der stetig steigenden Komfortanforderungen bei Kraftfahrzeugen, nicht mehr als ausreichend angesehen.

Im Hinblick auf das verbesserte Isolieren solcher Schwingungen werden heute sogenannte aktiv gesteuerte Hydrolager eingesetzt, die jeweils einen Aktor, der auch als Aktuator bezeichnet wird, aufweisen. Bezüglich einer grundlegenden Wirkungsweise eines Aktors wird auf die Druckschrift DE 198 39 464 C2 verwiesen. Bei dem Aktor handelt es sich deshalb insbesondere um einen elektromagnetischen Linearaktor und vorzugsweise um einen Reluktanz-Linearaktor. Grundsätzlich können jedoch auch andere Aktoren, insbesondere andere elektrische Aktoren, eingesetzt werden. Als besonders zweckmäßig haben sich Aktoren herausgestellt, die jeweils einen Stator und einen Anker umfassen. Der Anker ist dabei beweglich gelagert zu dem Stator ausgebildet, so dass der Anker gegenüber dem Stator in Längsrichtung des Aktors ausgelenkt werden kann. Der Anker ist mechanisch mit einer Steuermembran verbunden, die vorzugsweise der Trennwand zugeordnet ist. Somit ist die Steuermembran zur Veränderung des Arbeitskammervolumens ausgebildet. Die Steuermembran kann dabei durch einen flexiblen Teil der Trennwand gebildet sein. Es ist aber auch möglich, dass die Steuermembran von der Trennwand eingefasst ist und somit als Bestandteil der Trennwand angesehen wird. Die Steuermembran kann in ihrer Normalenrichtung elastisch verformt werden. Indem der Anker mechanisch an die Steuermembran gekoppelt ist, kann mit dem Aktor die Steuermembran in ihrer Normalenrichtung gesteuert verformt werden. Dabei kann es vorgesehen sein, dass der Anker nicht unmittelbar mit der Steuermembran verbunden ist, sondern dass beispielsweise ein Gelenksmechanismus und/oder ein Stößel vorgesehen sind, die zwischen dem Anker und der Steuermembran angeordnet sind, um Bewegungen und/oder Kräfte vom Anker auf die Steuermembran zu übertragen. Mit dem Verformen der Steuermembran in ihrer Normalenrichtung verändert sich das Hydraulikvolumen der Arbeitskammer. Dies gilt insbesondere dann, wenn die Steuermembran einen Teil der Trennwand zu der Arbeitskammer bildet. Deshalb dient der Aktor auch zur Steuerung des Hydraulikvolumens der Arbeitskammer.

Wird das Hydrolager zur Lagerung eines Motors eines Kraftfahrzeuges eingesetzt, so können Sensoren des Kraftfahrzeugs eingesetzt werden, um die vom Motor ausgehenden Schwingungen in einen möglichst nur sehr gedämpften Maß an einen Innenraum zu übertragen oder die Schwingungen des Motors sogar vollständig zu entkoppeln. Hierzu kann beispielsweise ein Sensor vorgesehen sein, der Schwingungen des Motors oder des Chassis messen kann. Alternativ können auch mehrere Sensoren an unterschiedlichen Orten des Motors und/oder des Chassis vorgesehen sein.

Werden von dem Sensor zur Messung der Schwingungen des Chassis hochfrequente Schwingungen erfasst, kann die Steuermembran von dem Aktor synchron ausgelenkt werden. Die Richtung der Auslenkung kann dabei durch die Bauart der Trennwand bzw. der Steuermembran bestimmt sein. Die Schwingungen des Motors verursachen entsprechende hochfrequente Druckschwankungen in der Hydraulikflüssigkeit der Arbeitskammer. Mit der synchronen Auslenkung der Steuermembran werden diese hochfrequenten Druckschwankungen möglichst vollständig ausgeglichen. Bestenfalls kommt es somit zu einer Kompensation, so dass diese hochfrequenten Schwingungen nicht von dem Hydrolager übertragen werden. Entsprechend hochfrequente Schwingungen verursachen deshalb im Innenraum des Kraftfahrzeugs keine oder nur sehr geringe Geräuschemissionen.

Durch die erläuterte Ansteuerung des Aktors und des entsprechenden Einwirkens auf die Steuermembran soll also eine Absenkung der dynamischen Federrate im Bereich der hochfrequenten Schwingungen bewirkt werden. Mit anderen Worten soll das Hydrolager für hochfrequente Schwingungen "weich" geschaltet werden. Bei niederfrequenten Schwingungen oder quasistatischen Belastungen des Hydrolagers wird die Steuermembran nicht aktiv angesteuert. Erhöht sich nun der Druck in der Arbeitskammer, kann die Steuermembran nachgeben, in dem sie durch die Hydraulikflüssigkeit aus der Arbeitskammer ausgelenkt wird. Im passiven Betrieb gibt die Steuermembran einem Druck aus der Arbeitskammer also nach. Aufgrund der Nachgiebigkeit der Steuermembran und ihrer hydraulischen Verbindung zu der Arbeitskammer verringert die Steuermembran die dynamische Steifigkeit des Hydrolagers. Für niederfrequente Schwingungen und/oder quasistatische Belastungen tritt weiterhin eine verringerte Dämpfung auf. Es wird auch von einem sogenannten Dämpfungsverlust gesprochen. Teilweise wurden Versuche unternommen, diesen Dämpfungsverlust auszugleichen, indem die Steifigkeit der Steuermembran erhöht wurde. Dies hat jedoch negativen Einfluss auf das Isolationsverhalten im höherfrequenten Bereich, insbesondere zwischen 20 Hz und 200 Hz. Außerdem vergrößert sich der notwendige Bauraum, wenn die Steifigkeit der Steuermembran erhöht werden sollte, da der Aktor entsprechend größer dimensioniert werden muss, um die entsprechend größeren Kräfte für die steifere Steuermembran zu überwinden.

Die US 2011/042873 A1 offenbart ein Hydrolager mit einer Tragfeder, einer von der Tragfeder umschlossenen und mit Hydraulikflüssigkeit gefüllten Arbeitskammer, einer Ausgleichskammer sowie einer zwischen der Arbeitskammer und Ausgleichskammer angeordneten Trennwand. Zwischen der Arbeitskammer und der Ausgleichskammer ist ein Drosselkanals zum Austausch von Hydraulikflüssigkeit ausgebildet. Weiterhin weist das Hydrolager ein Steuermembran zur Veränderung eines Arbeitskammervolumens der Arbeitskammer, sowie einen Aktor zum Auslenken des Steuermembrans auf. Das Hydrolager weist einen Kanal auf, der von der Arbeitskammer zu dem Steuermembran führt. Eine Regelung im Resonanzbereich wird durch den Aufbau nicht oder nur unzureichend ermöglicht.

Die US 6 176 477 B1 und US 2011/042872 A1 offenbaren weitere Ausbildungen eines regelbaren Hydrolagers mit einer Arbeitskammer und einer Ausgleichskammer zur Schwingungsdämpfung von Motoren.

Der Erfindung liegt deshalb die Aufgabe zu Grunde, ein Hydrolager bereitzustellen, bei dem die genannten Nachteile verhindert oder verringert werden. Vorzugsweise sollte das Hydrolager dazu ausgebildet sein, für quasistatische Belastungen, im niederfrequenten Schwingungsbereich und im höherfrequenten Schwingungsbereich eine möglichst gute Dämpfung beziehungsweise Isolation zu bieten. Zusätzlich oder alternativ soll eine zumindest verbesserte Regelung des Hydrolagers im Resonanzbereich erfolgen können.

Gemäß einem ersten Aspekt wird die Aufgabe gelöst durch das erfindungsgemäße Hydrolager mit einer Tragfeder, einer von der Tragfeder zumindest teilweise umschlossenen Arbeitskammer, die mit einer Hydraulikflüssigkeit gefüllt ist, einer Ausgleichskammer, einer Trennwand, die zwischen der Arbeitskammer und der Ausgleichskammer angeordnet ist, einem zwischen der Arbeitskammer und der Ausgleichskammer ausgebildeten Drosselkanal zum Austausch von Hydraulikflüssigkeit, einer Steuermembran, die zur Veränderung eines Arbeitskammervolumens der Arbeitskammer ausgebildet ist, und einem Aktor zum Auslenken der Steuermembran, wobei das Hydrolager einen Steuerkanal aufweist, der von der Arbeitskammer zu der Steuermembran führt, und wobei ein Strömungswiderstand des Steuerkanals größer als ein Strömungswiderstand des Drosselkanals ist. Erfindungsgemäß ist eine Druckkammer vorgesehen, wobei die Steuermembran zwischen dem Steuerkanal und der Druckkammer angeordnet ist. Mit einem Auslenken der Steuermembran wird deshalb nicht nur das Volumen der Arbeitskammer sondern auch das Volumen der Druckkammer verändert. Ein derartiger Aufbau ist grundsätzlich aus dem Stand der Technik bekannt und wird auch als invertierten Aufbau bezeichnet. Denn die Druckkammer kann einen Druck aufweisen, der größer als der nominelle Druck in der Arbeitskammer ist. Bei einer Ansteuerung der Steuermembran wirken deshalb die auf das Hydrolager von außen einwirkenden Kräfte und die Kraft des Ankers in entgegengesetzter Richtung, so dass eine Regelung auch im Resonanzbereich erfolgen kann. Die Druckkammer kann zu einer der Arbeitskammer zugewandten Seite der Trennwand angeordnet sein, so dass ein Ankerstößel des Ankers durch eine Bohrung der Trennwand führen kann, wobei der übrige Anker und der Stator auf der von der Arbeitskammer abgewandten Seite der Trennwand angeordnet sind.

Der Erfindung liegt dabei der Gedanke zu Grunde, einen Einfluss der genannten Nachgiebigkeit der Steuermembran auf die dynamische Steifigkeit des Hydrolagers bei niederfrequenten Schwingungen und/oder bei quasistatischen Belastungen zu verringern. Indem der Strömungswiderstand des Steuerkanals größer als ein Strömungswiderstand des Drosselkanals ist, dominiert der Drosselkanal bzw. die mittels des Drosselkanals an die Arbeitskammer hydraulisch gekoppelte Ausgleichskammer einen Einfluss auf die dynamische Steifigkeit des Hydrolagers bei quasistatischen Belastungen und/oder niederfrequenten Schwingungen.

Kommt es bei dem erfindungsgemäßen Hydrolager nun zu einer quasistatischen Belastung oder zu niederfrequenten Schwingungen, werden diese zumindest anteilig von der Tragfeder aufgenommen, die eine relativ große Steifigkeit aufweist. Aufgrund des verhältnismäßig großen Strömungswiderstands des Steuerkanals im Vergleich zu dem Drosselkanal drängt bei dieser Belastungsart nur ein vernachlässigbar kleiner Volumenstrom durch den Steuerkanal. Um die Steifigkeit für eine derartige quasistatische Belastung zu beeinflussen, wäre jedoch ein höherer Austausch an Hydraulikflüssigkeit notwendig, da quasistatische Belastungen beziehungsweise niederfrequente Schwingungen in der Regel eine große Amplitude aufweisen. Ein entsprechender Austausch von Hydraulikflüssigkeit tritt jedoch aufgrund des Strömungswiderstands des Steuerkanals nicht auf. Niederfrequente Schwingungen mit großen Amplituden werden durch das Zusammenwirken der Arbeitskammer und der Ausgleichskammer über den Drosselkanal gedämpft. Dabei werden größere Mengen der Hydraulikflüssigkeit von der Arbeitskammer in die Ausgleichskammer und umgekehrt geleitet. Aufgrund des größeren Strömungswiderstands des Steuerkanals drängt nur ein vernachlässigbarer kleiner Volumenstrom durch den Steuerkanal zu der Steuermembran. Deshalb werden die für den niederfrequenten Schwingungsbereich vorgesehene dynamische Steifigkeit und das Dämpfungsverhalten des Hydrolagers nicht oder nur sehr wenig durch die Steuermembran beeinflusst. Die Dämpfungswirkung wird also durch den Drosselkanal dominiert und bleibt wie gewünscht erhalten.

Treten hochfrequente Schwingungen mit im Allgemeinen kleinen Amplituden auf, kann die Hydraulikflüssigkeit aufgrund ihrer Trägheit und Viskosität nicht in der Weise oder Menge durch den Drosselkanal strömen, dass es in dem Drosselkanal zu einer Dissipation und einer korrespondierenden Dämpfung der Schwingungen kommt. Aufgrund des höheren Strömungswiderstands des Steuerkanals kann die Hydraulikflüssigkeit ebenfalls nicht in der Weise oder Menge durch den Steuerkanal strömen, dass es in dem Steuerkanal zu einer Dissipation und einer korrespondierenden Dämpfung der hochfrequenten Schwingungen kommt. Die hochfrequenten Schwingungen werden deshalb nicht durch Dissipation in einem der beiden Kanäle gedämpft. Vielmehr ist der Steuerkanal durch seine hydraulische Verbindung zwischen der Arbeitskammer und der Steuermembran dazu ausgebildet, um ebenfalls hochfrequente Schwingungen, die von der Steuermembran ausgehen, in die Arbeitskammer zu übertragen. Hierzu bedarf es keines Austausches von großen Mengen von Hydraulikflüssigkeit. Vielmehr handelt es sich um pulsähnliche Bewegungen der Hydraulikflüssigkeit in dem Steuerkanal. Mit einem entsprechenden Einbringen der hochfrequenten Schwingungen durch die Steuermembran kommt es zu einer Isolation der hochfrequenten Schwingungen, die durch die äußere Belastung des Hydrolagers in der Arbeitskammer entstehen. Mit der Isolation der hochfrequenten Schwingungen in der Arbeitskammer kommt es zu einer Absenkung der dynamischen Federrate des Hydrolagers im Bereich für derartige Schwingungen. Mit der erfindungsgemäßen Ausgestaltung des Hydrolagers kann dieses deshalb auch für hochfrequente Schwingungen "weich" geschaltet werden.

Eine bevorzugte Ausgestaltung des Hydrolagers zeichnet sich dadurch aus, dass der Strömungswiderstand des Steuerkanals in einem Schwinungsfrequenzbereich zwischen
5 Hz und 15 Hz größer als ein Strömungswiderstand des Drosselkanals in einem Schwinungsfrequenzbereich zwischen 5 Hz und 15 Hz ist. Mit dieser Ausgestaltung wird gewährleistet, dass die Nachgiebigkeit der Steuermembran im passiven Betrieb keinen oder zumindest im Wesentlichen keinen negativen Einfluss auf die Dämpfung durch den Drosselkanal in dem zuvor genannten Frequenzspektrum der niederfrequenten Schwingungen hat. In dem genannten Frequenzspektrum werden die niederfrequenten Schwingungen deshalb maßgeblich durch den Drosselkanal gedämpft. In dem nur ein vernachlässigbarer kleiner Anteil der Hydraulikflüssigkeit durch den Steuerkanal strömt, tritt im Wesentlichen kein Dämpfungsverlust ein. Damit kann die Dämpfung für das genannte Frequenzspektrum besonders einfach durch konstruktive Ausgestaltung des Drosselkanals bestimmt bzw. eingestellt werden.

Eine weitere bevorzugte Ausgestaltung des Hydrolagers zeichnet sich dadurch aus, dass der Strömungswiderstand des Steuerkanals mindestens das Fünffache des Strömungswiderstands des Drosselkanals ist. Indem der Strömungswiderstand des Steuerkanals mindestens das Fünffache, vorzugsweise mindestens das Zehnfache oder mindestens das Fünfzehnfache, des Strömungswiderstands des Drosselkanals beträgt, wird gewährleistet, dass nur ein sehr kleiner Teil der Hydraulikflüssigkeit aus der Arbeitskammer bei niederfrequenten Schwingungen und/oder bei quasistatischen Belastungen durch den Steuerkanal dringt. Trotz der Nachgiebigkeit der Steuermembran im passiven Betrieb hat diese deshalb im Wesentlichen keinen negativen Einfluss auf die Dämpfung durch den Drosselkanal bzw. durch die Tragfeder. Die Nachgiebigkeit der Steuermembran wird also effektiv für quasistatische Belastungen und/oder niederfrequente Schwingungen entkoppelt.

Eine weitere bevorzugte Ausgestaltung des Hydrolagers zeichnet sich dadurch aus, dass der Drosselkanal einen Tiefpass-Charakter mit einer Grenzfrequenz f1, insbesondere mit f1 zwischen 10 Hz und 30 Hz, aufweist. So kann der Drosselkanal eine Grenzfrequenz von f1 zwischen 15 Hz und 25 Hz, insbesondere etwa 20 Hz, aufweisen. Damit wird verhindert, dass der Drosselkanal zur effektiven Dämpfung von hochfrequenten Schwingungen ausgebildet ist. Somit können die Steuermembran und der Steuerkanal konstruktiv optimal, getrennt voneinander ausgestaltet werden, um die hochfrequenten Schwingungen möglichst zu isolieren. Um dem Drosselkanal einen Tiefpass-Charakter aufzuprägen, hat es sich in der Praxis gezeigt, dass dies durch eine röhrförmige Ausgestaltung des Kanals bereits erreicht werden kann. Die zugehörige Grenzfrequenz kann dabei beispielsweise durch die Länge des Kanals, durch den Querschnitt des Kanals, durch Bögen und/oder durch in den Kanal hineinragende Vorsprünge konstruktiv bestimmt werden.

Eine weitere bevorzugte Ausgestaltung des Hydrolagers zeichnet sich dadurch aus, dass der Steuerkanal einen Tiefpass-Charakter mit einer Grenzfrequenz von f2, insbesondere mit f2 zwischen 2 Hz und 7 Hz, aufweist. So kann die Grenzfrequenz des Steuerkanals etwa 5 Hz betragen. Mit einer derartigen Grenzfrequenz für den Tiefpass-Charakter des Steuerkanals kann besonders sicher gewährleistet sein, dass der Steuerkanal keinen oder zumindest nur einen sehr kleinen Einfluss auf die Dämpfung von niederfrequenten Schwingungen durch den Drosselkanal hat. Denn die niederfrequenten Schwingungen haben für gewöhnlich ein Frequenzspektrum von 5 Hz bis 20 Hz. Durch den zuvor genannten Tiefpass-Charakter des Steuerkanals werden Schwingungen aus diesem Frequenzspektrum jedoch nicht von dem Steuerkanal zu der Steuermembran durchgelassen. Die Steuermembran beeinflusst diese Schwingungen also nicht. Um dem Steuerkanal einen Tiefpass-Charakter aufzuprägen, hat es sich in der Praxis auch hier gezeigt, dass dies durch eine röhrförmige Ausgestaltung des Kanals bereits erreicht werden kann. Die zugehörige Grenzfrequenz kann dabei beispielsweise durch die Länge des Kanals, durch den Querschnitt des Kanals, durch Bögen und/oder durch in den Kanal hineinragende Vorsprünge konstruktiv bestimmt werden.

Eine weitere bevorzugte Ausgestaltung des Hydrolagers zeichnet sich dadurch aus, dass die Grenzfrequenz f2 kleiner als die Grenzfrequenz f1 ist. Die Grenzfrequenz des Steuerkanals ist also kleiner als die Grenzfrequenz des Drosselkanals. Dies gewährleistet, dass der Einfluss der Steuermembran auf die Dämpfung durch den Drosselkanal begrenzt oder sogar minimiert ist.

Eine weitere bevorzugte Ausgestaltung des Hydrolagers zeichnet sich dadurch aus, dass ein Querschnitt des Steuerkanals kleiner als ein Querschnitt des Drosselkanals ist. Der Querschnitt eines Kanals ist maßgeblich für den Strömungswiderstand eines Kanals verantwortlich. Insbesondere der minimale Querschnitt beziehungsweise Querschnittsdurchmesser eines Kanals beträgt zur Bestimmung des Strömungswiderstands des Kanals bei. Um nun zu gewährleisten, dass der Steuerkanal einen größeren Strömungswiderstand als der Drosselkanal aufweist, ist es vorgesehen, dass der Querschnitt des Steuerkanals kleiner als der Querschnitt des Drosselkanals ist. Vorzugsweise ist mit den genannten Querschnitten jeweils der minimale Querschnitt oder jeweils der mittlere Querschnitt gemeint.

Eine weitere bevorzugte Ausgestaltung des Hydrolagers zeichnet sich dadurch aus, dass der kleinste Querschnitt des Drosselkanals mindestens das Doppelte von dem kleinsten Querschnitt des Steuerkanals ist. Besonders bevorzugt beträgt der kleinste Querschnitt des Drosselkanals mindestens das Dreifache, mindestens das Vierfache oder mindestens das Sechsfache des kleinsten Querschnitts des Steuerkanals. Diese Ausgestaltungen gewährleisten, dass der Strömungswiderstand des Steuerkanals deutlich größer als der Strömungswiderstand des Drosselkanals ist. Wird vereinfacht davon ausgegangen, dass sich der Strömungswiderstand quadratisch zu dem Querschnitt verhält, beträgt der Strömungswiderstand des Steuerkanals mindestens das Vierfache von dem Strömungswiderstand des Drosselkanals. Mit einem derart hohen Abstand der beiden Strömungswiderstände bietet der Steuerkanal kaum Möglichkeiten zur Beeinflussung der Dämpfung durch den Drosselkanal bei niederfrequenten Schwingungen und/oder bei quasistatischen Belastungen.

Eine weitere bevorzugte Ausgestaltung des Hydrolagers zeichnet sich dadurch aus, dass eine Länge des Steuerkanals größer als eine Länge des Drosselkanals ist. Neben dem Querschnitt eines Kanals beeinflusst die Länge eines Kanals maßgeblich dessen Strömungswiderstand. Indem der Steuerkanal länger als der Drosselkanal ausgebildet ist, wird gewährleistet, dass der Steuerkanal einen größeren Strömungswiderstand als der Drosselkanal aufweist, so dass die zuvor genannten Vorteile verwirklicht werden können.

Eine weitere bevorzugte Ausgestaltung des Hydrolagers zeichnet sich dadurch aus, dass der Steuerkanal radial innenseitig hervorspringende Strömungswiderstandselemente und/oder Strömungslenkungselemente aufweist. Ein Strömungswiderstand eines Steuerkanals kann eine Druckkomponente und eine Reibungskomponente aufweisen. Mit den zuvor genannten Elementen kann vorzugsweise die Druckkomponente des Strömungswiderstands verändert werden. Treten nun quasistatische Belastungen oder niederfrequente Schwingungen auf, trifft ein in den Steuerkanal eintretender Flüssigkeitsstrom auf die genannten Elemente. Dies gilt insbesondere dann, wenn die Schwingungen oder Belastungen mit großen Amplituden auftreten. Somit kann der Steuerkanal durch die zuvor genannten Elemente gezielt derart konstruktiv ausgebildet sein, um quasistatische Belastungen und/oder niederfrequente Schwingungen von der Steuermembran zu zumindest im Wesentlichen zu entkoppeln.

Eine weitere bevorzugte Ausgestaltung des Hydrolagers zeichnet sich dadurch aus, dass eine Innenwandung des Steuerkanals eine Rauheit von mindestens 1,4 µm, vorzugsweise von mindestens 1,6 µm, aufweist. Die Rauheit der Innenwendung hat einen maßgeblichen Einfluss auf den Strömungswiderstand des Steuerkanals. Mit der zuvor genannten Rauheit wird gewährleistet, dass der Strömungswiderstand des Steuerkanals ausreichend hoch ist, um einen möglichst geringen Einfluss auf die Dämpfung von niederfrequenten Schwingungen durch den Drosselkanal zu erreichen.

Eine weitere bevorzugte Ausgestaltung des Hydrolagers zeichnet sich dadurch aus, dass der Steuerkanal von der Trennwand zu der Steuermembran führt. Somit ist der Steuerkanal zwischen der Arbeitskammer und der Steuermembran angeordnet. Mit der Anordnung des Steuerkanals an der Trennwand kann mittels der Steuermembran unmittelbar Einfluss auf das Arbeitskammervolumen der Arbeitskammer genommen werden. Somit kann die Steuermembran ihre vorgesehene Funktion, nämlich die gewünschte Isolation von hochfrequenten Schwingungen, ausführen.

Eine weitere bevorzugte Ausgestaltung des Hydrolagers zeichnet sich dadurch aus, dass der Drosselkanal und der Steuerkanal getrennt voneinander ausgebildet sind. Die Strömungen von Hydraulikflüssigkeit in den Kanälen beeinflussen sich also nicht unmittelbar gegenseitig. Damit können die gewünschte Dämpfung durch den Drosselkanal und die gewünschte Isolation mittels der Steuermembran getrennt voneinander angepasst werden.

Gemäß einem weiteren Aspekt wird die eingangs genannte Aufgabe außerdem durch ein Kraftfahrzeug gelöst, das einen Fahrzeugrahmen, einen Motor und ein Motorlager umfasst, das eine lagernde Verbindung zwischen dem Motor und dem Fahrzeugrahmen herstellt, wobei das Motorlager durch ein erfindungsgemäßes Hydrolager ausgebildet ist. Dabei gelten Merkmale, Details und Vorteile, die im Zusammenhang mit dem erfindungsgemäßen Hydrolager beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematische Querschnittsansicht des Hydrolagers in einer ersten Ausgestaltung,
- Fig. 2: eine schematische Ansicht des Hydrolagers entlang eines Schnittes A-A, und
- Fig. 3: eine schematische Querschnittsansicht des Hydrolagers in einer zweiten Ausgestaltung.

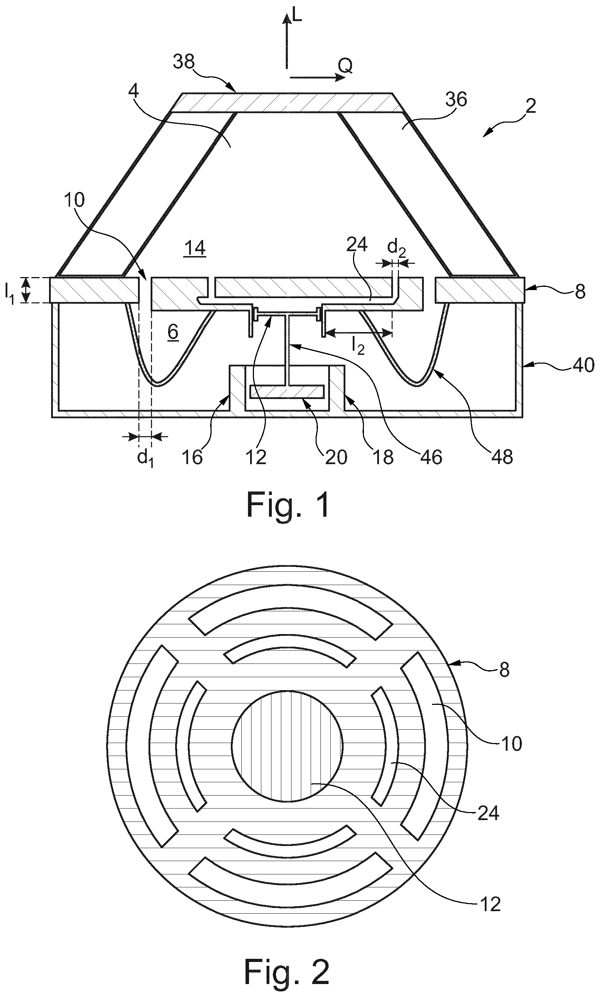

Aus der Figur 1 ist ein Hydrolager 2 zu erkennen. Das Hydrolager 2 umfasst eine als Gummielement ausgestaltete Tragfeder 36. Diese Tragfeder 36 ist für gewöhnlich als Hohlkörper ausgebildet, wobei die Oberseite der Tragfeder 36 eine Abdeckung 38 aufweist. An der Abdeckung 38 ist zumeist ein Anschlusselement (nicht dargestellt) zur Befestigung eines Motors angebracht. **In** einer einfachen Ausgestaltung handelt es sich bei dem Anschlusselement um einen Gewindebolzen, der mit dem Motor verschraubt werden kann. An der Unterseite der Tragfeder 36 schließt die Trennwand 8 an. Zwischen der Tragfeder 36, der Abdeckung 38 und der Trennwand 8 bildet sich die Arbeitskammer 4 aus. Die Arbeitskammer 4 ist mit einer Hydraulikflüssigkeit gefüllt. Hierbei handelt es sich vorzugsweise um ein Gemisch aus Öl und Wasser. **In** Längsrichtung L unterhalb der Trennwand 8 schließt das hohlzylindrische Basisgehäuse 40 an, dessen Innenraum durch einen flexiblen Trennkörper 48 unterteilt ist. Der Trennkörper kann dazu aus elastischem Material hergestellt und/oder als Rollmembran ausgebildet sein. Der Trennkörper 48 hat eine Ringform, so dass eine radial innenseitige Kante und eine radial außenseitige Kante beabstandet zueinander an der Trennwand 8 befestigt sind. Der von der Trennwand 8 und dem Trennkörper 48 eingeschlossene Raum bildet die Ausgleichskammer 6 des Hydrolagers 2. Die Ausgleichskammer 6 ist bevorzugt ebenfalls mit Hydraulikflüssigkeit gefüllt, die vorzugsweise ein Gemisch aus Öl und Wasser ist. Aus der Figur 1 ist somit zu entnehmen, dass die Trennwand 8 zwischen der Arbeitskammer 4 und der Ausgleichskammer 6 angeordnet ist.

Zur Dämpfung von niederfrequenten Schwingungen, die von dem Motor über die Abdeckung 38 auf der Tragfeder 36 und somit auch auf ein Arbeitskammervolumen 14 der Arbeitskammer 4 wirken, ist ein zwischen der Arbeitskammer 4 und der Ausgleichskammer 6 ausgebildeter Drosselkanal 10 zum Austausch von Hydraulikflüssigkeit vorgesehen. Wie in Fig. 1 dargestellt, wird der Drosselkanal 10 beispielsweise von der Trennwand 8 gebildet oder ist in diese eingefasst. Wird die Tragfeder 36 durch die Schwingungen gestaucht, führt dies zumeist zu einer Erhöhung des Drucks der Hydraulikflüssigkeit in der Arbeitskammer 4 und/oder zu einer Verkleinerung des Arbeitskammervolumens 14 der Arbeitskammer 4. In beiden Fällen erfolgt ein Volumenstrom der Hydraulikflüssigkeit aus der Arbeitskammer 4 durch den Drosselkanal 10 in die Ausgleichskammer 6. Der Drosselkanal 10 weist einen derart angepassten Durchmesser auf, dass Dissipation entsteht und die auf die Tragfeder 36 einwirkenden Schwingungen gedämpft werden. Die Dämpfung mittels des Drosselkanals 10 ist jedoch nur für niederfrequentierte Schwingungen effektiv. Bei höherfrequenten Schwingungen, so beispielsweise ab 20 Hz, werden Schwingungen durch den Drosselkanal 10 so gut wie gar nicht gedämpft oder verhindert.

Zur Isolierung von Schwingungen mit einer Frequenz von mehr als 20 Hz weist das Hydrolager 2 eine Steuermembran 12 auf, die in Fluidverbindung mit der Arbeitskammer 4 ausgebildet ist. Dazu erstreckt sich ein Steuerkanal 24 von der Arbeitskammer 4 zu der Steuermembran 12, mit dem die hydraulische Verbindung von der Arbeitskammer 4 zu der Steuermembran 12 hergestellt wird. Mit anderen Worten führt der Steuerkanal 24 von der Arbeitskammer 4 zu der Steuermembran 12. Das eine Ende des Steuerkanals 24 ist zu der Arbeitskammer 4 hin geöffnet. Dazu ist der Steuerkanal 24 der Trennwand 8 zugeordnet, wobei zumindest ein Abschnitt des Steuerkanals 24 von der Trennwand 8 gebildet sein kann. Der übrige Abschnitt des Steuerkanals 24 kann stoffschlüssig, formschlüssig und/oder kraftschlüssig mit der Trennwand 8 verbunden sein. An das andere Ende des Steuerkanals 24 schließt die Steuermembran 12 an. Sie verschließt dieses Ende des Steuerkanals 24. Somit kommuniziert die Steuermembran 12 mit dem Arbeitskammervolumen 14 der Arbeitskammer 4.

Die Steuermembran 12 ist in Längsrichtung L verschiebbar oder elastisch verformbar ausgestaltet. Entsprechend ihrer derartigen Veränderbarkeit vergrößert oder verkleinert sich das Arbeitskammervolumen 14 der Arbeitskammer 4. Diese Veränderbarkeit der Steuermembran 12 wird vorteilhaft genutzt, um höherfrequente Schwingungen möglichst zu isolieren. Dazu ist die Steuermembran 12 an ihrer von dem Steuerkanal 24 oder der Arbeitskammer 4 abgewandten Seite mechanisch mit einem Ankerstößel 46 eines Ankers 20 eines Aktors 16 des Hydrolagers 2 verbunden. Der Aktor 16 weist außerdem einen an dem Basisgehäuse 40 befestigten Stator 18 auf, zu dem der Anker 20 beweglich gelagert angeordnet ist. Bei dem Aktor 16 handelt es sich um einen elektromagnetischen Linearaktor. Andere Aktoren sind aber auch denkbar.

Wie bereits erläutert, dient die Steuermembran 12 zur Isolation von hochfrequenten Schwingungen des Hydrolagers 2 beziehungsweise eines Motors gegenüber eines Chassis. Der Aktor 16 zur Ansteuerung der Steuermembran 12 wird deshalb vorzugsweise nur dann aktiv, wenn derartige hochfrequente Schwingungen auftreten. Bei niederfrequenten Schwingungen und/oder bei quasistatischen Belastungen des Hydrolagers 2 besteht deshalb bei bekannten Hydrolagern die Gefahr, dass die Steuermembran 12 mit ihrer hydraulischen Verbindung zu der Arbeitskammer 4 die dynamische Steifigkeit des Hydrolagers 2 für niederfrequente Schwingungen und/oder quasistatische Belastungen verkleinert, was zu einer Verschlechterung der Dämpfung der niederfrequenten Schwingungen und/oder der quasistatischen Belastungen führen kann. Deshalb ist es für das erfindungsgemäße Hydrolager 2 vorgesehen, dass der Strömungswiderstand des Steuerkanals 24 größer als ein Strömungswiderstand des Drosselkanals 10 ist. Treten nun niederfrequente Schwingungen mit großen Amplituden auf, werden größere Mengen der Hydraulikflüssigkeit von der Arbeitskammer 4 durch den Drosselkanal 10 in die Ausgleichskammer 6 geleitet, und umgekehrt. In dem Drosselkanal 10 entsteht sodann Dissipation, was zu einer Dämpfung der niederfrequenten Schwingungen führt. Aufgrund des höheren Strömungswiderstands des Steuerkanals 24 durchdringt nur eine sehr kleine oder sogar vernachlässigbar kleine Menge der Hydraulikflüssigkeit den Steuerkanal 24 zu der Steuermembran 12. Deshalb wird das Schwingungsverhalten des Hydrolagers 2 bei niederfrequenten Schwingungen effektiv zumindest im Wesentlichen nicht von der Steuermembran 12 beeinflusst. Vielmehr dominiert der Drosselkanal 10, und die beiden mittels des Drosselkanals 10 in Fluidverbindung stehenden Kammern 4, 6 das niederfrequente Schwingungsverhalten des Hydrolagers 2. Entsprechendes gilt bei quasistatischen Belastungen. Treten hingegen hochfrequente Schwingungen mit kleinen Amplituden auf, kommt es zu keinem Austausch von großen Mengen von Hydraulikflüssigkeit zwischen der Arbeitskammer 4 und der Ausgleichskammer 6 durch den Drosselkanal 10. Dies ist einerseits auf die genannten kleinen Amplituden und andererseits auf die Trägheit und Viskose der Hydraulikflüssigkeit zurückzuführen. Der Drosselkanal 10 trägt deshalb nicht zu einer maßgeblichen Dämpfung der hochfrequenten Schwingungen bei. Die hochfrequenten Schwingungen können jedoch von der Steuermembran 12 aufgrund ihrer hydraulischen Verbindung mittels des Steuerkanals 24 zu der Arbeitskammer 4 zumindest teilweise isoliert werden. Hierzu bedarf es keines Austausches von großen Mengen von Hydraulikflüssigkeit. Vielmehr können mit der Steuermembran 12 ebenfalls hochfrequente Schwingungen erzeugt werden, die mittels der Hydraulikflüssigkeit in dem Steuerkanal 12 auf die Hydraulikflüssigkeit in der Arbeitskammer 4 übertragen werden. Mit dem entsprechenden Einbringen der hochfrequenten Schwingungen durch die Steuermembran 12 kommt es sodann zu einer Isolation der hochfrequenten Schwingungen des Hydrolagers 2, die durch äußere Belastungen des Hydrolagers 2 in der Arbeitskammer 4 entstehen können. Mit der Steuermembran 12 und dem Steuerkanal 24 ist das Hydrolager 2 deshalb dazu ausgebildet, um hochfrequente Schwingungen des Hydrolagers 2 zu isolieren, was zu einer Absenkung der dynamischen Federrate des Hydrolagers 2 im Bereich derartiger Schwingungen führt.

Um zu gewährleisten, dass die Steuermembran 12 einen möglichst geringen oder sogar fast gar keinen Einfluss auf das Dämpfungsverhalten niederfrequente Schwingungen durch den Drosselkanal 10 hat, ist es wie erläutert vorgesehen, dass der Strömungswiderstand des Steuerkanals 24 größer der Strömungswiderstand des Drosselkanals 10 ist. Dies kann beispielsweise dadurch erreicht werden, dass der Querschnitt des Drosselkanals 10 größer als der Querschnitt des Steuerkanals 24 ist. Mit dem Querschnitt kann beispielsweise die Querschnittsfläche des jeweiligen Kanals gemeint sein. Der Querschnitt kann sich alternativ auch auf den Querschnittsdurchmesser des jeweiligen Kanals beziehen. Mit Blick auf Figur 1 kann es deshalb vorgesehen sein, dass der Querschnittdurchmesser d1 des Drosselkanals 10 doppelt so groß ist wie der Querschnittsdurchmesser d2 des Steuerkanals 24. Zum Erreichen des höheren Strömungswiderstands des Steuerkanals 24 kann es alternativ oder ergänzend vorgesehen sein, dass die Länge l1 des Drosselkanals 10 kleiner ist als die Länge l2 des Steuerkanals 24 ist. Vorzugsweise ist die Länge I2 des Steuerkanals 24 doppelt so groß wie die Länge I1 des Drosselkanals 10.

Unter Bezugnahme auf die Figur 2 wird darauf hingewiesen, dass der Drosselkanal 10 und/oder der Steuerkanal 24 jeweils durch mehrere rohrförmige Verbindungen gebildet sein kann. Der jeweilige Kanalquerschnitt, der jeweilige Strömungswiderstand und/oder jeweils andere physikalische Eigenschaften des Drosselkanals 10 bzw. des Steuerkanals 24 repräsentieren deshalb die sich jeweils addieren und/oder überlagernden, korrespondierenden physikalischen Eigenschaften der genannten rohrförmigen Verbindungen. Wie aus der Figur 2 zu erkennen ist, kann der Drosselkanal 10 aus vier über den Umfang der Trennwand 8 verteilt angeordneten, rohrförmige Verbindungen zwischen der Arbeitskammer 4 und der Ausgleichskammer 6 gebildet sein, wobei sich der Querschnitt des Drosselkanals 10 durch Addition der einzelnen Querschnitte der rohrförmigen Verbindungen ergibt. Entsprechendes kann für den Steuerkanal 24 gelten.

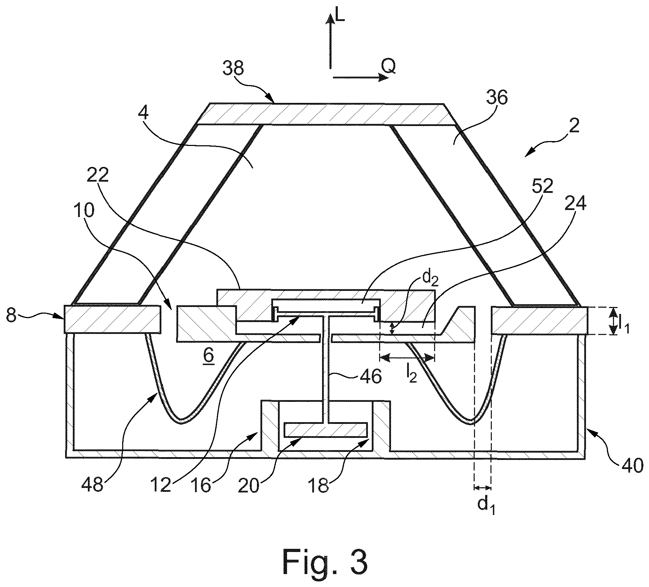

In der Figur 3 ist eine weitere Ausgestaltung des Hydrolagers 2 schematisch dargestellt. Das Hydrolager 2 ist im Wesentlichen baugleich zu dem Hydrolager 2, wie es mit Bezug zu der Figur 1 erläutert wurde. Es gelten deshalb die analogen Erläuterungen, Merkmale und/oder Vorteile. Das Hydrolager 2 aus der Figur 3 unterscheidet sich jedoch im Wesentlichen durch den Aufbau der Steuermembran 12, des mit der Steuermembran 12 verbundenen Ankers 20 und der Trennwand 8.

Wie aus der Figur 3 zu erkennen ist, führt der Ankerstößel 46 des Ankers 20 durch die Trennwand 8. Dazu kann der Ankerstößel 46 an der Trennwand 8 gelagert und/oder abgedichtet sein. An das vom Stator 18 abgewandte Ende des Ankerstößels 46 schließt die Steuermembran 12 an. Die Steuermembran 12 ist in ein Druckkammergehäuse 22 eingebracht, wobei sich zwischen der Steuermembran 12 und dem Druckkammergehäuse 22 eine Druckkammer 52 ausbildet. Somit ist die Steuermembran 12 zwischen dem Steuerkanal 24 und der Druckkammer 52 angeordnet. Das Druckkammergehäuse 22 kann an der Trennwand 8, und zwar vorzugsweise an der der Arbeitskammer 4 zugewandten Seite der Trennwand 8, angebracht sein. Alternativ kann das Druckkammergehäuse 22 von der Trennwand 8 gebildet sein. Die Druckkammer 52 kann mit getrockneter Luft, Gas und/oder einem Gasgemisch gefüllt sein. Mit dem Auslenken der Steuermembran 12 wird deshalb nicht nur das Volumen der Arbeitskammer 4 sondern auch das Volumen der Druckkammer 52 verändert. Ein derartiger Aufbau ist grundsätzlich aus dem Stand der Technik bekannt und wird auch als invertierter Aufbau bezeichnet.

### Bezugszeichenliste

### (Teil der Beschreibung)

- d1: Querschnittsdurchmesser
- d2: Querschnittsdurchmesser
- L: Längsrichtung
- l1: Länge
- l2: Länge
- Q: Querrichtung
- 2: Hydrolager
- 4: Arbeitskammer
- 6: Ausgleichskammer
- 8: Trennwand
- 10: Drosselkanal
- 12: Steuermembran
- 14: Arbeitskammervolumen
- 16: Aktor
- 18: Stator
- 20: Anker
- 22: Druckkammergehäuse
- 24: Steuerkanal
- 36: Tragfeder
- 38: Abdeckung
- 40: Basisgehäuse
- 46: Stößel
- 48: Trennkörper
- 52: Druckkammer

## Patentansprüche

1. Hydrolager (2) mit
- einer Tragfeder (36),
- einer von der Tragfeder (36) zumindest teilweise umschlossenen Arbeitskammer (4), die mit einer Hydraulikflüssigkeit gefüllt ist,
- einer Ausgleichskammer (6),
- einer Trennwand (8), die zwischen der Arbeitskammer (4) und der Ausgleichskammer (6) angeordnet ist,
- einem zwischen der Arbeitskammer (4) und der Ausgleichskammer (6) ausgebildeten Drosselkanal (10) zum Austausch von Hydraulikflüssigkeit,
- einer Steuermembran (12), die zur Veränderung eines Arbeitskammervolumens (14) der Arbeitskammer (4) ausgebildet ist, und
- einem Aktor (16) zum Auslenken der Steuermembran (12),
- wobei das Hydrolager (2) einen Steuerkanal (24) aufweist, der von der Arbeitskammer (4) zu der Steuermembran (12) führt, und
- ein Strömungswiderstand des Steuerkanals (24) größer als ein Strömungswiderstand des Drosselkanals (10) ist,
**dadurch gekennzeichnet, dass**
eine Druckkammer (52) vorgesehen ist, wobei die Steuermembran (12) zwischen dem Steuerkanal (24) und der Druckkammer (52) angeordnet ist.

2. Hydrolager (2) nach dem vorhergehenden Anspruch, **dadurch gekennzeichnet, dass** der Strömungswiderstand des Steuerkanals (24) in einem Schwinungsfrequenzbereich zwischen 5 Hz und 15 Hz größer als ein Strömungswiderstand des Drosselkanals (10) in einem Schwinungsfrequenzbereich zwischen 5 Hz und 15 Hz ist.

3. Hydrolager (2) nach einem der vorhergehenden Ansprüche, **dadurch gekennzeichnet, dass** der Strömungswiderstand des Steuerkanals (24) mindestens das Fünffache des Strömungswiderstands des Drosselkanals (10) ist.

4. Hydrolager (2) nach einem der vorhergehenden Ansprüche, **dadurch gekennzeichnet, dass** der Drosselkanal (10) einen Tiefpass-Charakter mit einer Grenzfrequenz f1, insbesondere mit f1 zwischen 10 Hz und 30 Hz, aufweist.

5. Hydrolager (2) nach einem der vorhergehenden Ansprüche, **dadurch gekennzeichnet, dass** der Steuerkanal (24) einen Tiefpass-Charakter mit einer Grenzfrequenz von f2, insbesondere f2 zwischen 2 Hz und 7 Hz, aufweist.

6. Hydrolager (2) nach einem der vorhergehenden Ansprüche, **dadurch gekennzeichnet, dass** die Grenzfrequenz f2 kleiner als die Grenzfrequenz f1 ist.

7. Hydrolager (2) nach einem der vorhergehenden Ansprüche, **dadurch gekennzeichnet, dass** ein Querschnitt des Steuerkanals (24) kleiner als ein Querschnitt des Drosselkanals (10) ist.

8. Hydrolager (2) nach dem vorhergehenden Anspruch, **dadurch gekennzeichnet, dass** der kleinste Querschnitt des Drosselkanals (10) mindestens das Doppelte von dem kleinsten Querschnitt des Steuerkanals (24) ist.

9. Hydrolager (2) nach einem der vorhergehenden Ansprüche, **dadurch gekennzeichnet, dass** eine Länge des Steuerkanals (24) größer als eine Länge des Drosselkanals (10) ist.

10. Hydrolager (2) nach einem der vorhergehenden Ansprüche, **dadurch gekennzeichnet, dass** der Steuerkanal (24) radial innenseitig hervorspringende Strömungswiderstandselemente und/oder Strömungslenkungselemente aufweist.

11. Hydrolager (2) nach einem der vorhergehenden Ansprüche, **dadurch gekennzeichnet, dass** eine Innenwandung des Steuerkanals (24) eine Rauheit von mindestens 1,4 µm aufweist.

12. Hydrolager (2) nach einem der vorhergehenden Ansprüche, **dadurch gekennzeichnet, dass** der Steuerkanal (24) von der Trennwand (8) zu der Steuermembran (12) führt.

13. Hydrolager (2) nach einem der vorhergehenden Ansprüche, **dadurch gekennzeichnet, dass** der Drosselkanal (10) und der Steuerkanal (24) getrennt voneinander ausgebildet sind.

14. Kraftfahrzeug umfassend
- einen Fahrzeugrahmen,
- einen Motor und
- ein Motorlager, das eine lagernde Verbindung zwischen dem Motor und dem Fahrzeugrahmen herstellt,
**dadurch gekennzeichnet, dass**
- das Motorlager durch ein Hydrolager (2) nach einem der vorhergehenden Ansprüche 1 bis 13 ausgebildet ist.

## Claims

1. Hydro bearing (2) with
- a suspension spring (36),
- a working chamber (4) at least partially enclosed by the suspension spring (36) and filled with a hydraulic fluid,
- a balancing chamber (6),
- a partition wall (8) which is arranged between the working chamber (4) and the compensation chamber (6),
- a throttle channel (10) formed between the working chamber (4) and the balancing chamber (6) for the exchange of hydraulic fluid,
- a control membrane (12), which is designed to change a working chamber volume (14) of the working chamber (4), and
- an actuator (16) for deflecting the control diaphragm (12),
- wherein the hydro bearing (2) has a control channel (24) leading from the working chamber (4) to the control diaphragm (12), and
- a flow resistance of the control channel (24) greater than a flow resistance of the throttle channel (10) is **characterized in that** a pressure chamber (52) is provided, wherein the control membrane (12) is located between the control channel (24) and the pressure chamber (52).

2. A hydrobearing (2) according to the preceding claim, **characterized in that** the flow resistance of the control channel (24) in a vibration frequency range between 5 Hz and 15 Hz is greater than a flow resistance of the throttle channel (10) in a vibration frequency range between 5 Hz and 15 Hz.

3. A hydro bearing (2) according to any one of the preceding claims, **characterized in that** the flow resistance of the control channel (24) is at least five times the flow resistance of the throttle channel (10).

4. Hydro bearing (2) according to any one of the preceding claims, **characterized in that** the throttle channel (10) has a low-pass character having a cut-off frequency f1, in particular with f1 between 10 Hz and 30 Hz.

5. A hydro bearing (2) according to any one of the preceding claims, **characterized in that** the control channel (24) has a low-pass character having a cut-off frequency of f2, in particular f2 between 2 Hz and 7 Hz.

6. Hydro bearing (2) according to any one of the preceding claims, **characterized in that** the cut-off frequency f2 is less than the cut-off frequency f1.

7. A hydrobearing (2) according to any one of the preceding claims, **characterized in that** a cross-section of the control channel (24) is smaller than a cross-section of the throttle channel (10).

8. A hydro bearing (2) according to the preceding claim, **characterized in that** the smallest cross-section of the throttle channel (10) is at least twice the smallest cross-section of the control channel (24).

9. A hydraulic bearing (2) according to any one of the preceding claims, **characterized in that** a length of the control channel (24) is greater than a length of the throttle channel (10).

10. A hydraulic bearing (2) according to any one of the preceding claims, **characterized in that** the control channel (24) has radially protruding flow resistance elements and/or flow control elements on the inside side.

11. A hydrobearing (2) according to any one of the preceding claims, **characterized in that** an inner wall of the control channel (24) has a roughness of at least 1.4 µm.

12. A hydro bearing (2) according to any one of the preceding claims, **characterized in that** the control channel (24) leads from the partition (8) to the control membrane (12).

13. A hydraulic bearing (2) according to any one of the preceding claims, **characterized in that** the throttle channel (10) and the control channel (24) are formed separately from each other.

14. Motor vehicle comprehensive
- a vehicle frame,
- an engine and
- an engine mount that creates a bearing connection between the engine and the vehicle frame,
**characterized by** the fact that
- the engine mount is formed by a hydraulic bearing (2) according to one of the preceding claims 1 to 13.

## Revendications

1. Roulement hydraulique (2) avec
- un ressort de suspension (36),
- une chambre de travail (4) au moins partiellement fermée par le ressort de suspension (36) et remplie d'un fluide hydraulique,
- une chambre d'équilibrage (6),
- une cloison de séparation (8) qui est disposée entre la chambre de travail (4) et la chambre de compensation (6),
- un canal d'étranglement (10) formé entre la chambre de travail (4) et la chambre d'équilibrage (6) pour l'échange de fluide hydraulique,
- une membrane de commande (12), qui est conçue pour modifier le volume d'une chambre de travail (14) de la chambre de travail (4), et
- un actionneur (16) pour dévier la membrane de commande (12),
- dans lequel le roulement hydraulique (2) a un canal de commande (24) menant de la chambre de travail (4) à la membrane de commande (12), et
- Une résistance à l'écoulement du canal de commande (24) supérieure à une résistance à l'écoulement du canal d'étranglement (10) est **caractérisée en ce qu'**une chambre de pression (52) est prévue, dans laquelle la membrane de commande (12) est située entre le canal de commande (24) et la chambre de pression (52).

2. Roulement hydraulique (2) selon la revendication précédente, **caractérisé en ce que** la résistance à l'écoulement du canal de commande (24) dans une gamme de fréquences de vibration comprise entre 5 Hz et 15 Hz est supérieure à une résistance à l'écoulement du canal d'étranglement (10) dans une gamme de fréquences de vibration comprise entre 5 Hz et 15 Hz.

3. Roulement hydraulique (2) selon l'une quelconque des revendications précédentes, **caractérisé en ce que** la résistance à l'écoulement du canal de commande (24) est au moins cinq fois supérieure à la résistance à l'écoulement du canal d'étranglement (10).

4. Roulement hydraulique (2) selon l'une quelconque des revendications précédentes, **caractérisé en ce que** le canal d'accélérateur (10) a un caractère passe-bas ayant une fréquence de coupure f1, en particulier avec f1 entre 10 Hz et 30 Hz.

5. Roulement hydraulique (2) selon l'une quelconque des revendications précédentes, **caractérisé en ce que** le canal de commande (24) a un caractère passe-bas ayant une fréquence de coupure de f2, en particulier f2 comprise entre 2 Hz et 7 Hz.

6. Roulement hydraulique (2) selon l'une quelconque des revendications précédentes, **caractérisé en ce que** la fréquence de coupure f2 est inférieure à la fréquence de coupure f1.

7. Hydropalier (2) selon l'une quelconque des revendications précédentes, **caractérisé en ce qu'**une section transversale du canal de commande (24) est plus petite qu'une section transversale du canal d'accélérateur (10).

8. Roulement hydraulique (2) selon la revendication précédente, **caractérisé en ce que** la plus petite section transversale du canal d'accélérateur (10) est au moins deux fois la plus petite section transversale du canal de commande (24).

9. Roulement hydraulique (2) selon l'une quelconque des revendications précédentes, **caractérisé en ce qu'**une longueur du canal de commande (24) est supérieure à une longueur du canal d'étranglement (10).

10. Palier hydraulique (2) selon l'une quelconque des revendications précédentes, **caractérisé en ce que** le canal de commande (24) comporte des éléments de résistance à l'écoulement en saillie radiale et/ou des éléments de régulation d'écoulement sur la face intérieure.

11. Portant hydraulique (2) selon l'une quelconque des revendications précédentes, **caractérisé en ce qu'**une paroi interne du canal de commande (24) présente une rugosité d'au moins 1,4 µm.

12. Roulement hydraulique (2) selon l'une quelconque des revendications précédentes, **caractérisé en ce que** le canal de commande (24) mène de la cloison (8) à la membrane de commande (12).

13. Roulement hydraulique (2) selon l'une quelconque des revendications précédentes, **caractérisé en ce que** le canal d'accélérateur (10) et le canal de commande (24) sont formés séparément l'un de l'autre.

14. Véhicules à moteur tous risques
- un châssis de véhicule,
- un moteur et
- un support moteur qui crée une liaison de roulement entre le moteur et le châssis du véhicule,
**caractérisée par le fait que**
- Le support moteur est formé par un palier hydraulique (2) selon l'une des revendications précédentes 1 à 13.
